(19) Europäisches Patentamt
European Patent Office
Office européen des brevets

(11) **EP 3 731 177 A1**

(12) **EUROPEAN PATENT APPLICATION**
published in accordance with Art. 153(4) EPC

(43) Date of publication:
**28.10.2020 Bulletin 2020/44**

(21) Application number: **17935302.4**

(22) Date of filing: **20.12.2017**

(51) Int Cl.:
*G06T 7/00* (2017.01)    *G08G 1/16* (2006.01)

(86) International application number:
**PCT/JP2017/045801**

(87) International publication number:
**WO 2019/123582 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **FUJITSU LIMITED**
**Kanagawa 211-8588 (JP)**

(72) Inventors:
• **OKADA, Yasutaka**
**Hyogo 652-8510 (JP)**
• **MURASHITA, Kimitaka**
**Hyogo 652-8510 (JP)**

(74) Representative: **Haseltine Lake Kempner LLP**
**138 Cheapside**
**London EC2V 6BJ (GB)**

(54) **OBJECT INFORMATION GENERATION DEVICE AND OBJECT INFORMATION GENERATION PROGRAM**

(57) An object information generation device is disclosed that includes a measurement value calculation unit that calculates a measurement value indicating a position of a first point of an object at a plurality of time points including a first time point and a time point before the first time point on the basis of a monocular camera mounted on a moving body, an adopted value determination unit that determines an adopted value of the position of the first point, and a predicted value calculation unit that calculates a predicted value of the position of the first point on the basis of the measurement value or the adopted value at a time point before the first time point and a movement amount of the moving body to the first time point, and the adopted value determination unit determines the adopted value on the basis of a relationship between a difference between the measurement value and the predicted value at the first time point and a threshold.

FIG. 3

**Description**

TECHNICAL FIELD

The present disclosure relates to an object information generation device and an object information generation program.

BACKGROUND ART

A technology for generating object information regarding a position of an object around a moving body by using a monocular camera has been known.

CITATION LIST

PATENT DOCUMENT

Patent Document 1: Japanese Laid-open Patent Publication No. 2001-266160
Patent Document 2: Japanese Laid-open Patent Publication No. 2011-90490

SUMMARY OF INVENTION

TECHNICAL PROBLEM

However, the conventional technology described above has a problem in that accuracy of positional information of the object is insufficient. There are two kinds of erroneous ranging caused by the monocular camera as follows. The erroneous ranging includes a case where a ranging point that does not exist is erroneously output due to a failure in feature point matching and a case where an error is added to a ranging point due to a calculation error in a movement amount (base line length) of the moving body or the like.

Therefore, in one aspect, an object of the present invention is to enhance accuracy of positional information of an object by using a monocular camera.

SOLUTION TO PROBLEM

According to one aspect of the present disclosure, an object information generation device is provided that includes
a measurement value calculation unit that calculates a measurement value indicating a position of a first point of an object at a plurality of time points including a first time point and a second time point before the first time point on the basis of a monocular camera mounted on a moving body,
an adopted value determination unit that determines an adopted value of the position of the first point, and
a predicted value calculation unit that calculates a predicted value of the position of the first point on the basis of the measurement value or the adopted value at the second time point and a movement amount of the moving body from the second time point to the first time point, in which
the adopted value determination unit determines the adopted value on the basis of a relationship between a difference between the measurement value and the predicted value at the first time point and a threshold.

ADVANTAGEOUS EFFECTS OF INVENTION

According to the present disclosure, it is possible to enhance accuracy of positional information of an object by using a monocular camera.

BRIEF DESCRIPTION OF DRAWINGS

FIG. 1 is a diagram schematically illustrating an overall configuration of a vehicle system according to an embodiment.
FIG. 2 is a diagram illustrating an example of a hardware configuration of a sensing control device.

FIG. 3 is a diagram illustrating an example of a functional block of the sensing control device.

FIG. 4 is an explanatory diagram of a ranging value holding unit.

FIG. 5A is an explanatory diagram of a moving stereo method.

FIG. 5B is an explanatory diagram of the moving stereo method.

FIG. 6 is an explanatory diagram of a ranging value calculation unit.

FIG. 7 is an explanatory diagram of a boundary surface generation unit.

FIG. 8 is an explanation of a boundary surface.

FIG. 9A is an additional explanatory diagram related to generation of the boundary surface.

FIG. 9B is an additional explanatory diagram related to the generation of the boundary surface.

FIG. 9C is an additional explanatory diagram related to the generation of the boundary surface.

FIG. 10 is an explanatory diagram of a specific example (part 1) of a method for calculating a predicted value by a predicted value calculation unit.

FIG. 11 is an explanatory diagram of the specific example (part 2) of the method for calculating the predicted value by the predicted value calculation unit.

FIG. 12 is an explanatory diagram of an example of a method for calculating a difference and an example of a method for calculating an updated value by a ranging value determination unit.

FIG. 13 is an explanatory diagram of another example of the method for calculating the updated value.

FIG. 14 is a schematic flowchart illustrating an exemplary operation of a sensing control device according to the present embodiment.

FIG. 15 is a diagram illustrating a functional block according to a modification.

DESCRIPTION OF EMBODIMENTS

Hereinafter, each embodiment will be described in detail with reference to the accompanying drawings.

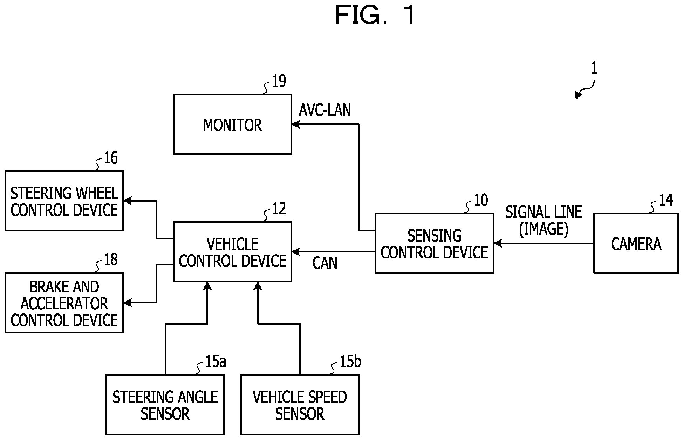

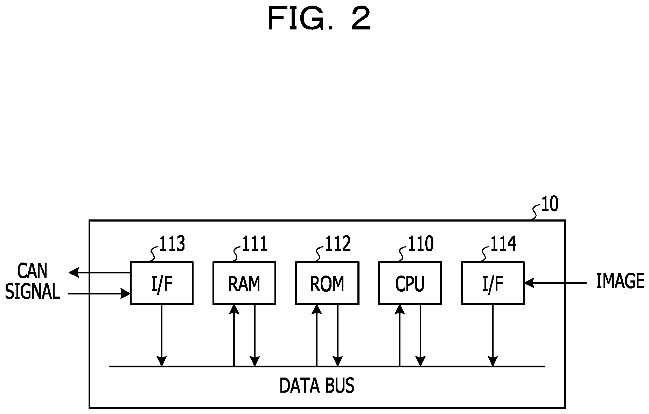

FIG. 1 is a diagram schematically illustrating an overall configuration of a vehicle system 1 according to an embodiment. FIG. 2 is a diagram illustrating an example of a hardware configuration of a sensing control device 10.

The vehicle system 1 is mounted on a vehicle (example of moving body). The vehicle system 1 includes the sensing control device 10 (example of object information generation device), a vehicle control device 12, a camera 14, a steering angle sensor 15a, a vehicle speed sensor 15b, a steering wheel control device 16, a brake and accelerator control device 18, and a monitor 19.

The sensing control device 10 has, for example, a form of an Electronic Control Unit (ECU) and has, for example, the hardware configuration as illustrated in FIG. 2. In the example illustrated in FIG. 2, the sensing control device 10 includes a Central Processing Unit (CPU) 110 (example of processing unit), a Random Access Memory (RAM) 111, a Read Only Memory (ROM) 112 (example of storage unit), various interfaces 113 and 114, or the like, and those are connected by a data bus.

The sensing control device 10 is connected to the vehicle control device 12, the camera 14, and the monitor 19. For example, the sensing control device 10 is connected to the vehicle control device 12 via a controller area network (CAN), and the sensing control device 10 is connected to the monitor 19 via an Audio-Visual Communication Local Area Network (AVC-LAN).

The sensing control device 10 calculates a boundary surface (described later) on the basis of an image of the camera 14, steering angle information from the steering angle sensor 15a, and vehicle speed information from the vehicle speed sensor 15b. Then, the sensing control device 10 executes parking position determination processing for determining a target parking position and a target parking direction on the basis of the calculated boundary surface. The parking position determination processing based on the boundary surface will be described later. The sensing control device 10 gives the result of the parking position determination processing to the steering wheel control device 16 and the brake and accelerator control device 18.

Similarly to the sensing control device 10, the vehicle control device 12 has, for example, a form of the ECU and has, for example, the hardware configuration as illustrated in FIG. 2. The vehicle control device 12 is connected to the steering wheel control device 16, the brake and accelerator control device 18, the steering angle sensor 15a, and the vehicle speed sensor 15b.

The camera 14 is a monocular camera and is attached to a rear portion of the vehicle. In the present embodiment, as an example, in a state where the camera 14 is attached, an optical axis of the camera 14 is fixed (in other words, optical axis of camera 14 is not variable). The camera 14 captures an image of a rear side of the vehicle. The camera 14 gives the captured image to the sensing control device 10. Note that the vehicle system 1 may further include another camera attached to a side portion of the vehicle or a front portion of the vehicle.

The steering angle sensor 15a detects a steering angle of a steering wheel (not illustrated). The steering angle sensor 15a gives steering angle information indicating the steering angle to the sensing control device 10 via the vehicle control device 12.

The vehicle speed sensor 15b detects a vehicle speed. The vehicle speed sensor 15b is, for example, a wheel speed sensor. The vehicle speed sensor 15b gives vehicle speed information indicating the vehicle speed to the sensing control device 10 via the vehicle control device 12.

The steering wheel control device 16 controls a turning direction (in other words, vehicle traveling direction) of a turning wheel of the vehicle until the vehicle reaches the target parking position so that the vehicle is positioned at the target parking position in the target parking direction according to the result of the parking position determination processing from the vehicle control device 12. For example, the steering wheel control device 16 controls the turning direction of the turning wheel via a power steering device (not illustrated).

According to the result of the parking position determination processing from the vehicle control device 12, the brake and accelerator control device 18 controls a braking force and a driving force of the vehicle until the vehicle reaches the target parking position so that the vehicle moves to the target parking position and stops at the target parking position. For example, the brake and accelerator control device 18 generates the braking force via a brake actuator (not illustrated) or generates the driving force via a driving force generation device (for example, engine, motor, or the like).

Note that each of the functions of the vehicle control device 12, the steering wheel control device 16, and the brake and accelerator control device 18 may be integrally implemented by a single control device, or a part of the functions may be implemented by another control device. For example, a part of or all of the functions of the vehicle control device 12 may be implemented by the steering wheel control device 16 and/or the brake and accelerator control device 18. Furthermore, the vehicle control device 12 may be implemented by a combination of a plurality of control devices.

The monitor 19 is provided in a vehicle interior. The monitor 19 may be a liquid crystal display or the like. The monitor 19 may be implemented by a display of a portable terminal carried into the vehicle by a user.

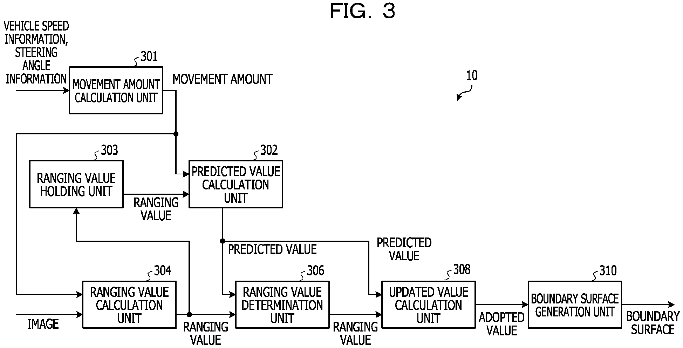

FIG. 3 is a diagram illustrating an example of a functional block of the sensing control device 10.

The sensing control device 10 includes a movement amount calculation unit 301, a predicted value calculation unit 302, a ranging value holding unit 303, a ranging value calculation unit 304 (example of measurement value calculation unit), a ranging value determination unit 306, an updated value calculation unit 308, and a boundary surface generation unit 310. The movement amount calculation unit 301, the predicted value calculation unit 302, the ranging value calculation unit 304, the ranging value determination unit 306, the updated value calculation unit 308 (example of adopted value determination unit), and the boundary surface generation unit 310 can be implemented, for example, by executing a program in the ROM 112 by the CPU 110. The ranging value holding unit 303 can be implemented by, for example, the RAM 111. In a modification, the ranging value holding unit 303 may be implemented by an auxiliary storage device such as a flash memory, a Hard Disk Drive (HDD), a Solid State Drive (SSD), or the like.

The movement amount calculation unit 301 calculates a movement amount of the vehicle on the basis of the vehicle speed information and the steering angle information. The movement amount of the vehicle may be indicated by translation (for example, translation of center of rear wheel shaft of vehicle) and rotation (for example, rotation of center of gravity behind vehicle) per minute time or minute traveling distance in the plane coordinate system (coordinate system in horizontal plane) viewed from above. The rotation is, for example, rotation of a vehicle longitudinal axis in a horizontal plane (change amount of vehicle direction). The movement amount calculation unit 301 calculates the movement amount of the vehicle from a predetermined reference position or reference time point (for example, second time point described later) by integrating a translation amount and a rotation amount per minute time or per minute traveling distance.

The predicted value calculation unit 302 calculates a predicted value of a position of each point (referred to as "detection target point" below (example of first point)) of an object to be detected (referred to as "target object" below) on the basis of the movement amount from the movement amount calculation unit 301 and the ranging value (described later) from the ranging value holding unit 303.

In the present embodiment, as an example, the predicted value calculation unit 302 calculates the predicted value of the position (coordinate) of the detection target point with a plane coordinate system viewed from above (coordinate system in horizontal plane) using a predetermined fixed point (for example, position of center of rear wheel shaft of vehicle at certain time point, such as parking start position) as an origin. Hereinafter, the plane coordinate system viewed from above using a predetermined fixed point as an origin is referred to as an "absolute coordinate system". A specific example of the method for calculating the predicted value by the predicted value calculation unit 302 will be described later.

Furthermore, in the present embodiment, as an example, the predicted value calculation unit 302 calculates predicted values at a plurality of time points. In this case, when calculating a predicted value at a certain time point (referred to as "first time point"), the predicted value calculation unit 302 uses a ranging value at a time point before the first time point (referred to as "second time point") and a movement amount from the second time point to the first time point. Then, the predicted value calculation unit 302 calculates the predicted values at the plurality of first time points while changing the first time point. In the modification, the predicted value calculation unit 302 may calculate the predicted value at any time point. This is because the position of the detection target point does not change in a case where a target object is a fixed object (in other words, in a case where object is not moving object). In this case, when calculating the predicted value at the first time point, the predicted value calculation unit 302 similarly uses a ranging value at the second time point and a movement amount from the second time point to the first time point. However, a predicted value is calculated for the same detection target point only once.

Note that in the modification in which the ranging value holding unit 303 holds an adopted value (described later) determined by the updated value calculation unit 308, the predicted value calculation unit 302 may calculate the predicted value of the detection target point of the target object on the basis of the movement amount from the movement amount calculation unit 301 and the adopted value (described later) from the ranging value holding unit 303. In this case, since the adopted value is calculated on the basis of the ranging value as described later, the predicted value calculation unit 302 calculates the predicted value of the detection target point of the target object on the basis of the movement amount from the movement amount calculation unit 301 and the ranging value.

In the present embodiment, as an example, the target object includes a parking frame (for example, white line painted on road surface), an obstacle, and a wheel stopper. The obstacle is an object to which the vehicle should not hit or is not preferable to hit, and is, for example, another vehicle, a person, a wall, a fence, a bicycle, a motorcycle, a relatively high fixed object, a moving object, or the like. Therefore, for example, an object with no thickness on the road surface other than the parking frame (characters and symbols, shadow, or the like), a springboard of a time-based parking, or the like does not fall under the obstacle. Note that these objects are not included in the target object. However, these objects may be detected for other uses.

Although the detection target point may be any position, the detection target point may be a feature point that can be recognized or tracked by the ranging value calculation unit 304. For example, in a case of the obstacle, a corner or a side portion of the obstacle is the detection target point. Furthermore, in a case of the parking frame, a straight line or a corner is the detection target point. The number of detection target points for one target object is arbitrary. However, the number of the detection target points is preferably plural so that the boundary surface to be described later can be generated.

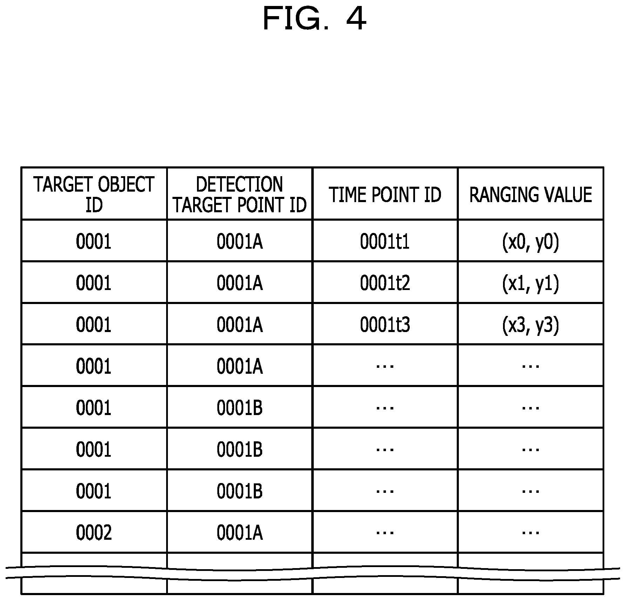

The ranging value holding unit 303 holds a ranging value calculated by the ranging value calculation unit 304. In the example illustrated in FIG. 4, ranging values are stored for each target object identifier (ID), for each detection target point ID, and for each time point ID. In FIG. 4, for example, regarding a detection target point ID "0001A" of a target object ID "0001", ranging values at a plurality of time points are obtained. However, in the modification, the ranging value holding unit 303 may hold the adopted value (described later) determined by the updated value calculation unit 308 instead of the ranging value calculated by the ranging value calculation unit 304.

The ranging value calculation unit 304 calculates a ranging value (example of measurement value) indicating the position of the detection target point of the target object on the basis of the image from the camera 14. In the present embodiment, as an example, the ranging value calculation unit 304 calculates the position of the detection target point in the absolute coordinate system.

The ranging value calculation unit 304 first measures a positional relationship of the vehicle with respect to the detection target point, for example, in a camera coordinate system. For example, the ranging value calculation unit 304 derives a coordinate value of the detection target point in the plane coordinate system viewed from above using the center of the rear wheel shaft of the vehicle as the origin. In order to derive the coordinate value of the target object, it is possible to use, for example, the Structure from Motion (SFM), the moving stereo method, or the like.

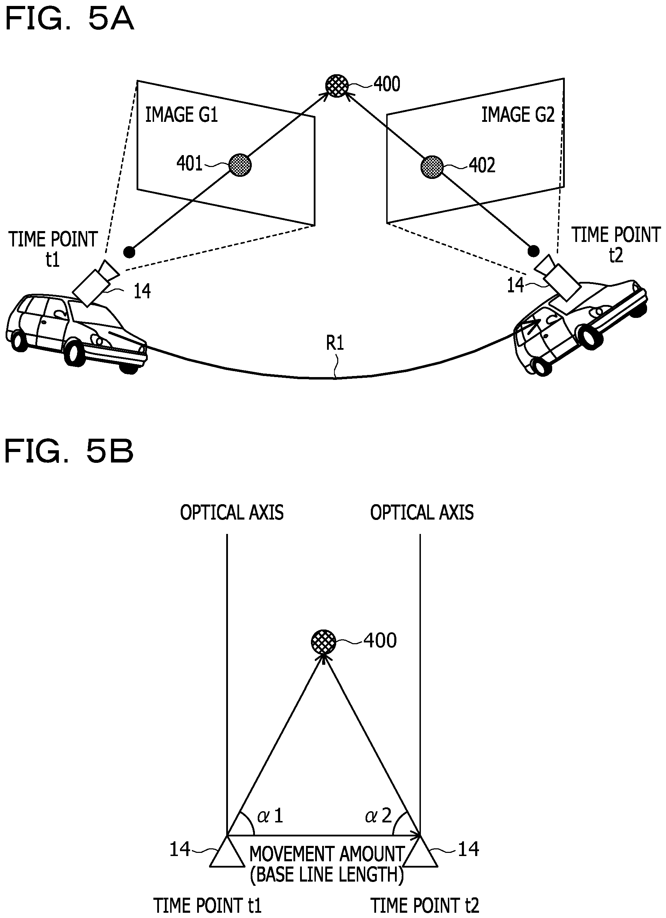

For example, in the moving stereo method, as schematically illustrated in FIG. 5A, a detection target point 400 is captured as a picture 401 in an image G1 at a time point t1, and the detection target point 400 is captured as a picture 402 in an image G2 at a time point t2. Between the time points t1 and t2, the vehicle moves (refer to arrow R1). Therefore, the camera 14 moves accordingly. At this time, when the pictures 401 and 402 are matched as the same detection target point 400, a three-dimensional position of the detection target point 400 can be derived on the basis of pixel positions (pixel positions of pictures 401 and 402) of the detection target point 400 in each image. In other words, as illustrated in FIG. 5B, the three-dimensional position of the detection target point 400 can be derived from an angle $\alpha 1$ of the detection target point 400 with respect to the position of the camera 14 at the time point t1, an angle $\alpha 2$ of the detection target point 400 with respect to the position of the camera 14 at the time point t2, and the movement amount on the basis of the principle of the triangulation. Note that the angle $\alpha 1$ is an angle with respect to the optical axis of the camera 14 at the time point t1, and the angle $\alpha 2$ is an angle with respect to the optical axis of the camera 14 at the time point t2. The angles $\alpha 1$ and $\alpha 2$ can be derived on the basis of lens distortion and external parameters. The lens distortion is an internal parameter and is determined depending on the lens design of the camera 14. The external parameter includes an attaching angle (yaw, pitch, roll) of the camera 14 and a physical attaching position of the camera 14 and is determined depending on the camera attaching design.

When deriving the coordinate value of the detection target point in the camera coordinate system, the ranging value calculation unit 304 converts the coordinate value of the detection target point into the absolute coordinate system on the basis of the movement amount from the movement amount calculation unit 301 and a conversion formula (conversion matrix) from the camera coordinate system into the absolute coordinate system. The coordinate value of the absolute coordinate system obtained by the ranging value calculation unit 304 in this way corresponds to the "ranging value".

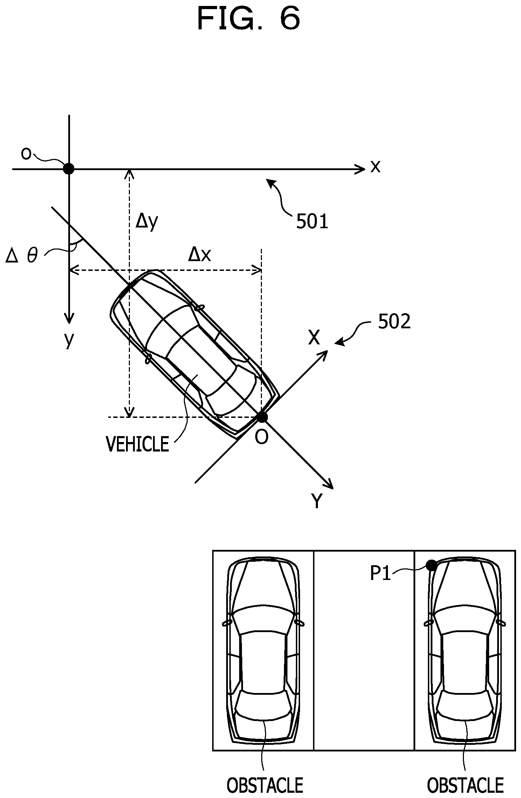

For example, as illustrated in FIG. 6, a corner P1 of the obstacle is obtained in a camera coordinate system 502 by the moving stereo method and the like as described above on the basis of the image from the camera 14. For example, coordinates of the corner P1 of the obstacle are (X1, Y1) in the camera coordinate system 502. On the other hand, a relationship between the camera coordinate system 502 and an absolute coordinate system 501 can be determined on the basis of the movement amount from the movement amount calculation unit 301 from a time point when the vehicle is positioned at the origin of the absolute coordinate system 501 to the present time. In FIG. 6, it is assumed that the movement amount from the movement amount calculation unit 301 from the time point when the vehicle is positioned at the origin of the camera coordinate system 502 to the present time be, for example, $(\Delta x, \Delta y, \Delta\theta)$. Therefore, the position of the corner P1 in the absolute coordinate system can be derived on the basis of the movement amount $(\Delta x, \Delta y, \Delta\theta)$ and the coordinates (X1, Y1) in the camera coordinate system 502.

The ranging value determination unit 306 determines whether or not a difference between the predicted value from the predicted value calculation unit 302 and the ranging value from the ranging value calculation unit 304 is equal to or more than a threshold. The threshold is set (adapted) so as to detect an excessive difference which is caused in a case where a non-existent ranging point is erroneously output due to a failure in the feature point matching or the like. An example of a method for calculating the difference by the ranging value determination unit 306 will be described later.

The updated value calculation unit 308 determines the adopted value of the position (coordinate) of the detection target point. Specifically, the updated value calculation unit 308 determines the adopted value on the basis of the determination result by the ranging value determination unit 306 and on the basis of the predicted value and the ranging value in a case where the difference between the predicted value from the predicted value calculation unit 302 and the ranging value from the ranging value calculation unit 304 is equal to or more than the threshold. For example, in a case where the difference between the predicted value from the predicted value calculation unit 302 and the ranging value from the ranging value calculation unit 304 is equal to or more than the threshold, an updated value different from both of the predicted value and the ranging value is calculated as the adopted value. For example, the updated value calculation unit 308 may calculate an average value of the predicted value and the ranging value as an updated value. Other method for calculating the updated value will be described later. On the other hand, in a case where the difference between the predicted value from the predicted value calculation unit 302 and the ranging value from the ranging value calculation unit 304 is not equal to or more than the threshold, the updated value calculation unit 308 adopts the ranging value as the adopted value.

In the present embodiment, as an example, the updated value calculation unit 308 determines the adopted value for each time point when the predicted value from the predicted value calculation unit 302 and the ranging value from the ranging value calculation unit 304 are obtained. However, in the modification, the updated value calculation unit 308 may determine the adopted value regardless of the time point. For example, in a case where the number of time points when the predicted value from the predicted value calculation unit 302 and the ranging value from the ranging value calculation unit 304 are obtained is equal to or more than a predetermined number, the updated value calculation unit 308 may determine the adopted value. This is because the boundary surface to be described later can be generated even when a single adopted value is determined for a single detection target point.

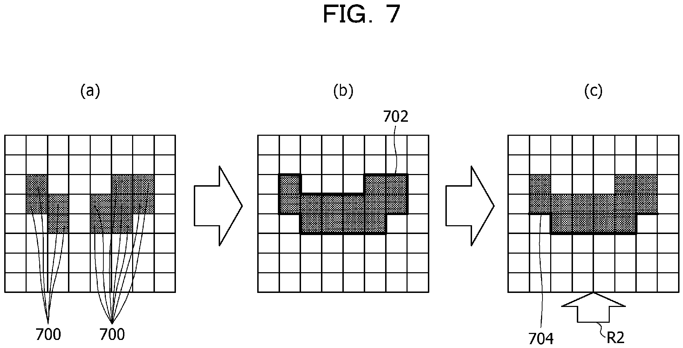

The boundary surface generation unit 310 executes boundary surface generation processing for generating the boundary surface of the target object on the basis of the adopted value from the updated value calculation unit 308. The boundary surface of the target object can be generated on the basis of the adopted values of the plurality of detection target points of the target object. For example, as illustrated in FIG. 7, the boundary surface generation unit 310 generates a region 700 including the adopted value by dividing a plane around the vehicle viewed from above into a grid-like shape and plotting the adopted value to a grid at the corresponding position (refer to (a)). At this time, the boundary surface generation unit 310 may generate a grid to which the adopted values equal to or more than a predetermined number are plotted as a region. Then, in a case where a distance between the regions 700 is short, the boundary surface generation unit 310 combines the regions 700 (refer to (b)). In other words, the boundary surface generation unit 310 estimates existence of a part of the target object in the short distance between the regions 700. Next, the boundary surface generation unit 310 sets an outer frame of the outermost grid in the region as an outline 702. Then, the boundary surface generation unit 310 deletes the occlusion outline on the basis of the camera position and sets a remaining outline as a boundary surface 704. In FIG. 7, a direction of the camera 14 is schematically indicated by an arrow R2.

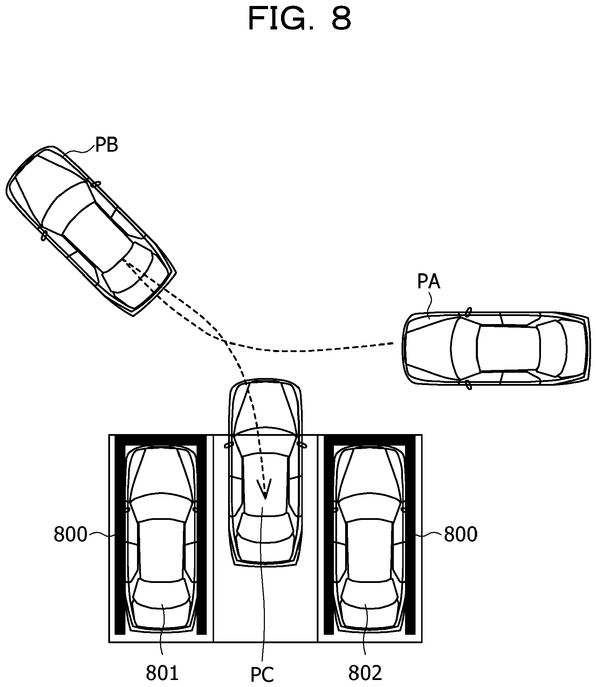

FIG. 8 is an explanatory diagram of the boundary surface and illustrates a situation of a parking viewed from above. In FIG. 8, obstacles 801 and 802 exist on both sides of a parking space, and boundary surfaces 800 of the obstacles 801 and 802 are illustrated. In this case, a vehicle can travel forward from a position PA to a parking start position PB and travel backward from the parking start position PB to a position PC in the parking space. At this time, the parking position determination processing is executed on the basis of the boundary surfaces 800, and a target parking position and a target parking direction are determined. For example, under a condition that the vehicle does not approach the boundary surface 800 by a predetermined distance or more, a trajectory when the vehicle travels backward (for example, trajectory of rear wheel center shaft), and the target parking position and the target parking direction are calculated. As a result, the vehicle can be parked without hitting the obstacles 801 and 802. Note that the parking space is, the parking space is a space where the vehicle is scheduled to exist when the parking is completed and may be set in a manner in which a predetermined margin is added to the boundary surface.

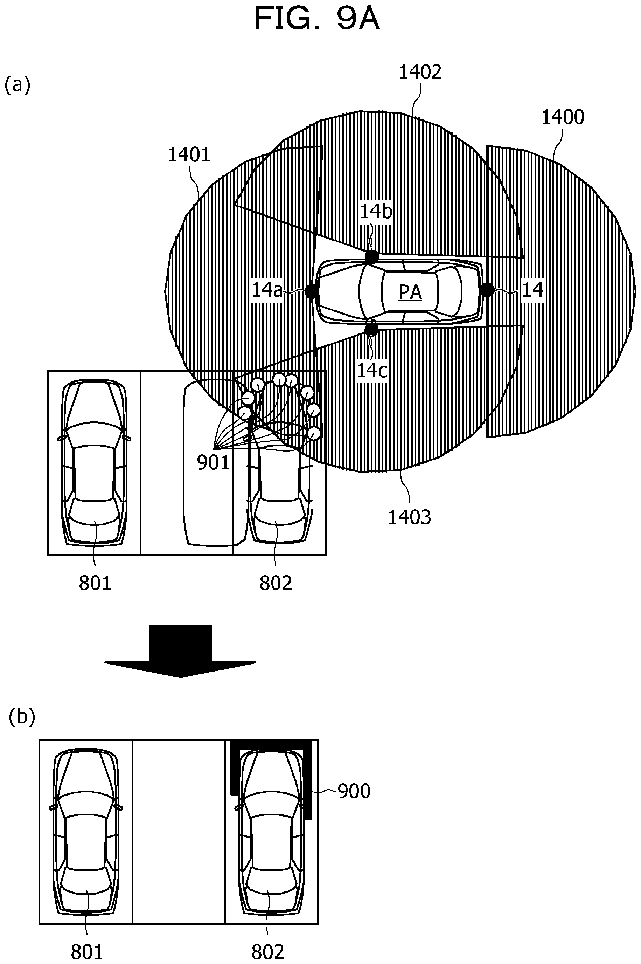

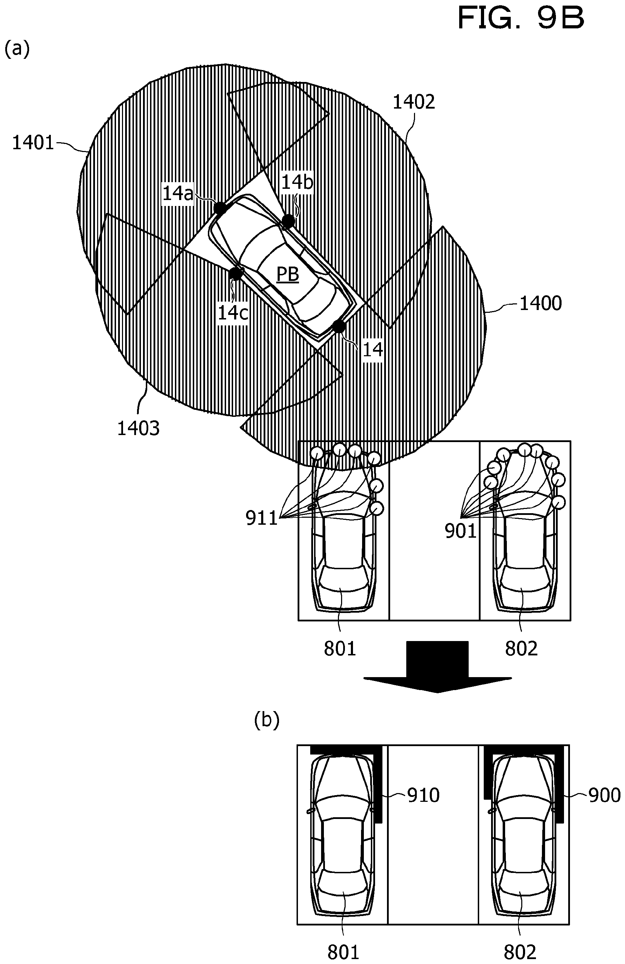

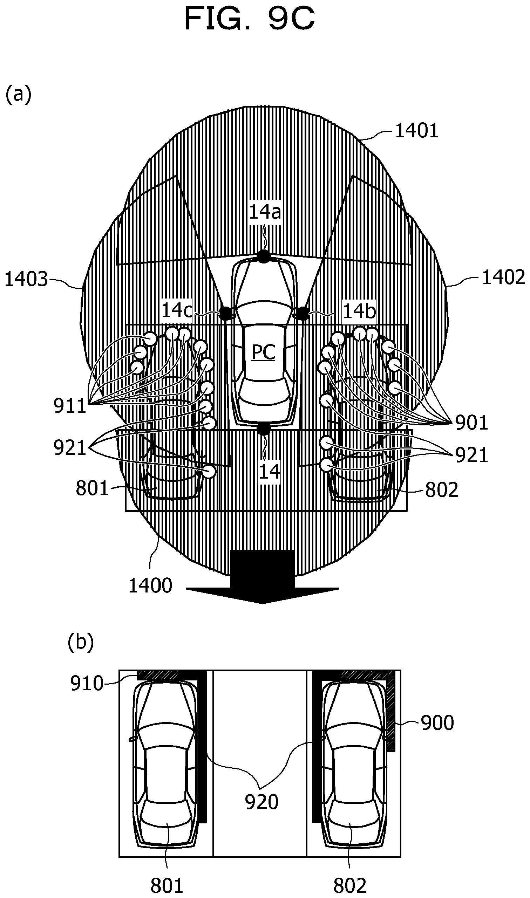

FIGs. 9A to 9C are additional explanatory diagrams regarding the generation of the boundary surfaces at the respective positions PA to PC in FIG. 8. FIG. 9A illustrates a boundary surface 900 and an adopted value 901 at the position PA in FIG. 8, FIG. 9B illustrates a boundary surface 910 and an adopted value 911 at the position PB in FIG. 8, and FIG. 9C illustrates a boundary surface 920 and an adopted value 921 at the position PC in FIG. 8. In FIGs. 9A to 9, (a) indicates a situation of the parking viewed from above. In FIGs. 9A to 9C, the vehicle includes a front camera 14a and side cameras 14b and 14c in addition to the camera 14. A region 1400 indicates a detection range of the camera 14, a region 1401 indicates a detection range of the front camera 14a, a region 1402 indicates a detection range of the side camera 14b, and a region 1403 indicates a detection range of the side camera 14c. In FIGs. 9A to 9C, obstacles 801 and 802 exist on both sides of the parking space.

When the vehicle is positioned at the position PA illustrated in FIG. 9A, the respective adopted values 901 of the detection target points on the front portion and the side portion (side portion on front side) of the obstacle 802 are obtained (refer to (a)), and the boundary surface 900 is generated (refer to (b)). When the vehicle is positioned at the position PB illustrated in FIG. 9B, the respective adopted values 911 of the detection target points on the front portion and the side portion (side portion on right front side) of the obstacle 801 are obtained (refer to (a)), and the boundary surface 910 is generated (refer to (b)). Note that the respective adopted values 911 of the detection target points on the side portion on the right front side are obtained when the vehicle reaches the position PA. When the vehicle is positioned at the position PC illustrated in FIG. 9C, the respective adopted values 921 of the detection target points on the side portions of the obstacles 801 and 802 are obtained (refer to (a)), and the boundary surface 920 is generated (refer to (b)).

In this way, according to the present embodiment, since the boundary surface generation unit 310 generates the boundary surface on the basis of the adopted values derived in a process for reaching the parking start position and a process for entering the parking space, automatic parking with high reliability can be realized on the basis of the boundary surface.

Here, in the automatic parking, in order to park without hitting an obstacle around the vehicle, it is useful to specify the boundary surface of the obstacle. In a case where the ranging points are densely obtained, it is advantageous from the viewpoint of collision determination. However, there is a disadvantage in the viewpoint of a memory usage amount. On the other hand, in a case where the ranging points are sparse, it is disadvantageous from the viewpoint of the collision determination. This is because there is a case where it is not possible to determine that the obstacle does not exist when the ranging point does not exist, in a ranging method based on the feature points using an image. On the other hand, the method using the boundary surface is advantageous from the viewpoint of the collision determination, and is also advantageous from the viewpoint of the memory usage amount.

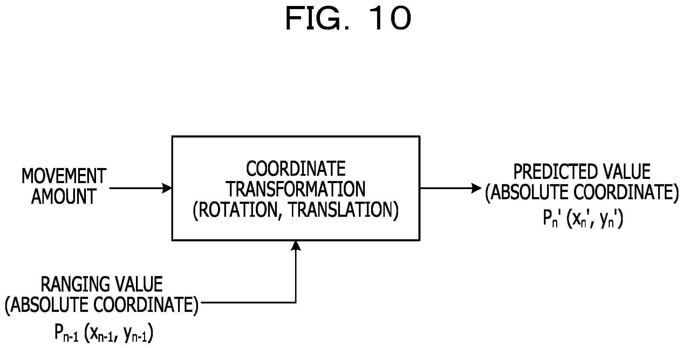

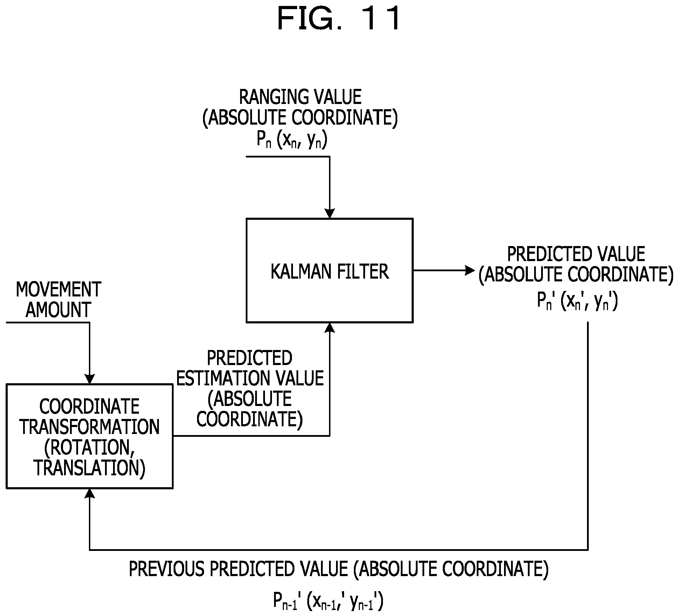

Next, a specific example of the method for calculating the predicted value by the predicted value calculation unit 302 will be described with reference to FIGs. 10 and 11.

FIG. 10 is an explanatory diagram of the specific example (part 1) of the method for calculating the predicted value by the predicted value calculation unit 302.

In FIG. 10, a predicted value at the first time point $P_n'$ $(x_n', y_n')$ is derived by coordinate transformation including rotation and translation on the basis of the movement amount from the second time point to the first time point and a ranging value $P_{n-1}$ $(x_{n-1}, y_{n-1})$ at the second time point. At this time, for the coordinate transformation, the following affine transformation may be used.

[Expression 1]

$$\begin{pmatrix} x_{n'} \\ y_{n'} \\ 1 \end{pmatrix} = \begin{pmatrix} \cos\Delta\theta & -\sin\Delta\theta & \Delta x \\ \sin\Delta\theta & \cos\Delta\theta & \Delta y \\ 0 & 0 & 1 \end{pmatrix} \begin{pmatrix} x_{n-1} \\ y_{n-1} \\ 1 \end{pmatrix}$$

Here, $(\Delta x, \Delta y, \Delta\theta)$ represents the movement amount described above (refer to FIG. 6).

According to the method for calculating the predicted value illustrated in FIG. 10, a relatively simple method for calculating the predicted value can be realized.

FIG. 11 is an explanatory diagram of the specific example (part 2) of the method for calculating the predicted value by the predicted value calculation unit 302.

In FIG. 11, a predicted value $P_n'$ ($x_n'$, $y_n'$) is obtained by inputting the ranging value $P_n$ ($x_n$, $y_n$) as an observation value and a predicted estimation value obtained from the previous predicted value $P_{n-1}'$ ($x_{n-1}'$, $y_{n-1}'$) and the movement amount into the Kalman filter. The predicted estimation value is derived by performing the coordinate transformation including rotation and translation on the basis of the movement amount on the previous predicted value $P_{n-1}'$ ($x_{n-1}'$, $y_{n-1}'$).

According to the method for calculating the predicted value illustrated in FIG. 11, the method for calculating the predicted value can be realized by using the Kalman filter.

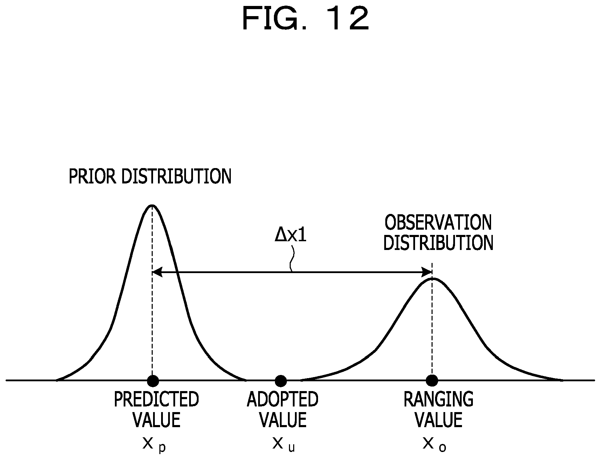

Next, with reference to FIG. 12, an example of a method for calculating a difference by the ranging value determination unit 306 and an example of a method for calculating the updated value will be described.

FIG. 12 is an explanatory diagram of an example of the method for calculating the difference and an example of the method for calculating the updated value by the ranging value determination unit 306. FIG. 12 illustrates a probability distribution of the predicted values (referred to as "prior distribution" below) and a probability distribution of the ranging values (referred to as "observation distribution" below) regarding an x coordinate of the absolute coordinate system.

In the present embodiment, as an example, a predicted value $x_p$ is a center value in a case where the prior distribution is assumed as a normal distribution, and a ranging value $x_o$ is a center value in a case where the observation distribution is assumed as a normal distribution. At this time, the ranging value determination unit 306 may calculate a difference $\Delta x1$ between the predicted value $x_p$ and the ranging value $x_o$. Alternatively, the ranging value determination unit 306 may calculate an average value of the differences between the predicted values and the ranging values at the same time point as a difference. Furthermore, the updated value calculation unit 308 calculates an updated value $x_u$ on the basis of the following formula.

[Expression 2]

$$x_u = x_p + \frac{\sigma_{x_p}^2}{\sigma_{x_p}^2 + \sigma_{x_o}^2}(x_o - x_p)$$

Here, $\sigma_{x_o}^2$ indicates the variance of the observation distribution, and $\sigma_{x_p}^2$ indicates the variance of the prior distribution.

Note that, in FIG. 12, the x coordinate of the absolute coordinate system has been described. However, similar processing is executed on the y coordinate of the absolute coordinate system.

Note that, since the ranging value $x_o$ is the center value of the observation distribution, the ranging value $x_o$ may be used as an adopted value. In other words, in a case where the difference calculated by the ranging value determination unit 306 is not equal to or more than the threshold, the ranging value $x_o$ may be adopted as the adopted value.

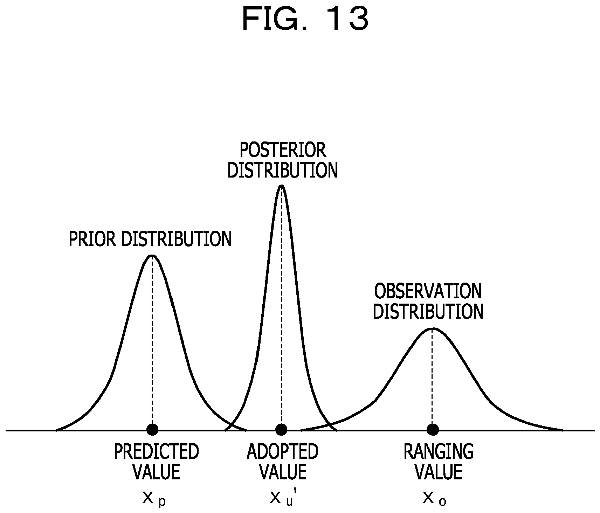

FIG. 13 is an explanatory diagram of another example of the method for calculating the updated value. FIG. 13 illustrates a probability distribution of an updated value candidate generated on the basis of both of the measurement value and the predicted value (referred to as "posterior distribution" below) together with the prior distribution and the observation distribution described above.

In this case, the updated value candidate is calculated as an average value of the measurement value and the predicted value for each time point. In the present embodiment, as an example, as the normal distribution, the posterior distribution is derived on the basis of average value data of the measurement value and the predicted value for each time point. At this time, the ranging value determination unit 306 calculates a center value $x_u'$ of the posterior distribution as an updated value (adopted value). Note that, in the modification, the ranging value determination unit 306 may calculate another value in the posterior distribution as an updated value (adopted value).

Note that, in FIG. 13, the x coordinate of the absolute coordinate system has been described. However, similar processing is executed on the y coordinate of the absolute coordinate system.

Here, light detection and ranging (LiDAR) is a method for measuring reflected light of laser irradiation and ranging the target object, and has high ranging density. Therefore, it is possible to calculate the boundary surface with high accuracy. However, it is expensive to mount the LiDAR on popular cars at present.

In this regard, a monocular camera has been already mounted on popular cars as a back monitor or the like, and the monocular camera is advantageous from the viewpoint of cost. On the other hand, at present, since ranging is not constantly performed depending on the texture and the shape of the obstacle, boundary surface calculation accuracy is low.

As a method for effectively increasing the ranging points by the monocular camera, there is a method using the ranging points if ranging can be performed in the past even in a case where ranging cannot be performed at present time since a positional relationship with the obstacle is changed in accordance with the movement of the vehicle. In other words, the above method is a method for increasing the ranging points by adding the ranging result in the past to the ranging result at present time (refer to FIGs. 9A to 9C) .

However, erroneous ranging constantly occurs in ranging. If the number of ranging points in the past is increased, the erroneous ranging is included. Therefore, it is not possible to correctly estimate an obstacle boundary line.

As described above, there are two kinds of erroneous ranging that is caused by the monocular camera. Specifically, the erroneous ranging includes a case where a ranging point that does not exist is erroneously output due to a failure in feature point matching and a case where an error is added to the ranging point due to a calculation error in the movement amount (base line length) of the vehicle or the like.

In this regard, according to the present embodiment, the ranging value determination unit 306 is included and it is determined whether or not the difference between the predicted value from the predicted value calculation unit 302 and the ranging value from the ranging value calculation unit 304 is equal to or more than the threshold so as to reduce a possibility that the ranging point that does not exist is erroneously output. In other words, for the ranging point that does not exist, by using a point that the difference between the predicted value from the predicted value calculation unit 302 and the ranging value from the ranging value calculation unit 304 is relatively large, it is possible to reduce the possibility that the ranging point that does not exist is erroneously output.

Furthermore, according to the present embodiment, in a case where the difference between the predicted value from the predicted value calculation unit 302 and the ranging value from the ranging value calculation unit 304 is equal to or more than the threshold, an updated value different from both of the predicted value and the ranging value is calculated as an adopted value. Therefore, according to the present embodiment, even in a case where the error is added to the ranging point due to the calculation error in the movement amount (base line length) of the vehicle or the like, the error can be reduced. In other words, according to the present embodiment, it is possible to calculate an updated value having a smaller error by using the predicted value and the ranging value and adopt the updated value as an adopted value.

In this way, according to the present embodiment, it is possible to enhance the accuracy of the boundary surface (example of positional information) of the object by using the monocular camera.

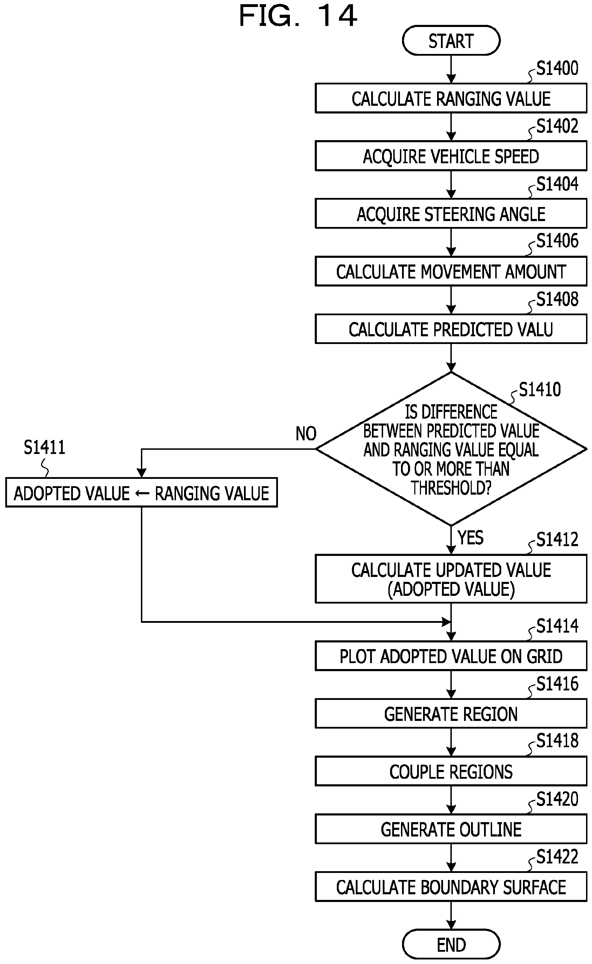

Next, with reference to FIG. 14, an exemplary operation of the sensing control device 10 according to the present embodiment will be described by using the flowchart.

FIG. 14 is a schematic flowchart illustrating an exemplary operation of the sensing control device 10 according to the present embodiment. Processing illustrated in FIG. 14 may be activated, for example, in a case where a parking assistance start condition is satisfied and be executed at each predetermined period.

In step S1400, the sensing control device 10 calculates the ranging value of the detection target point of the target object. There may be a plurality of target objects and detection target points regarding the single target object. The sensing control device 10 calculates the ranging values of the detection target points as many as possible. The calculation result is stored in the ranging value holding unit 303 in association with the time point ID corresponding to the current time point for each target object ID and for each detection target point ID.

In step S1402, the sensing control device 10 acquires the vehicle speed information.

In step S1404, the sensing control device 10 acquires the steering angle information.

In step S1406, the sensing control device 10 calculates a movement amount from the previous period on the basis of the vehicle speed information obtained in step S1402 and the steering angle information obtained in step S1404.

In step S1408, the sensing control device 10 calculates a predicted value at the position of the detection target point on the basis of the movement amount obtained in step S1406 and the ranging value obtained in step S1400. The method for calculating the predicted value is as described above. In FIG. 14, as an example, the calculation result of the predicted value is stored in the ranging value holding unit 303 in association with the time point ID corresponding to the current time point for each target object ID and for each detection target point ID.

In step S1410, the sensing control device 10 determines whether or not the difference between the ranging value and the predicted value regarding the time point ID corresponding to the current time point is equal to or more than the threshold for each target object ID and for each detection target point ID. Regarding the target object ID and the detection target point ID of which the difference is equal to or more than the threshold, the procedure proceeds to step S1412. Regarding the target object ID and the detection target point ID of which the difference is not equal or more than the threshold, the procedure proceeds to step S1411.

In step S1411, the sensing control device 10 determines the ranging value as an adopted value for each target object ID and for each detection target point ID having the ranging value and the predicted value of which the difference is not equal to or more than the threshold.

In step S1412, the sensing control device 10 calculates the updated value as an adopted value for each target object ID and for each detection target point ID having the ranging value and the predicted value of which the difference is equal to or more than the threshold. In FIG. 14, as an example, the updated value is calculated as an average value of the ranging value and the predicted value. However, in the modification, in a case where the number of pairs of the ranging value and the predicted value for each target object ID and for each detection target point ID is equal to or less than a predetermined value, the updated value may be calculated as an average value of the ranging value and the predicted value. In this case, in a case where the number of pairs exceeds the predetermined value, the updated value may be calculated by the method described above with reference to FIGs. 11 and 12.

In step S1414, the sensing control device 10 plots the adopted value obtained in step S1412 to a grid at the corresponding position (refer to FIG. 7). Since the adopted value is plotted for each period, there is a case where a plurality of adopted values is plotted to a certain grid. The grid to which the adopted value is plotted may be associated with the detection target point ID.

In step S1416, the sensing control device 10 generates a grid to which the adopted values equal to or more than a predetermined number are plotted as a region (refer to FIG. 7(a)). In this case, the detection target point ID associated with the grid to be the region may be excluded from the processing target in a next period and subsequent periods.

In step S1418, the sensing control device 10 couples the regions having a distance therebetween that is equal to or less than a predetermined distance (refer to FIG. 7(b)).

In step S1420, the sensing control device 10 generates an outline surrounding the region generated in step S1418 (refer to FIG. 7(b)).

In step S1422, the sensing control device 10 deletes the occluded outline and sets the remaining outline as a boundary surface (refer to FIG. 7(c)).

According to the processing illustrated in FIG. 14, the boundary surface of the obstacle can be calculated and updated in real time on the basis of the ranging value obtained for each predetermined period. As a result, as the number of obtained ranging values and the number of detection target point IDs increase, the boundary surface of the obstacle with higher reliability can be generated.

In the above, each of the embodiment has been described in detail. However, the present invention is not limited to a specific embodiment, and various modifications and changes are possible within the scope described in claims. Furthermore, it is also possible to combine all or a plurality of components in the embodiment described above.

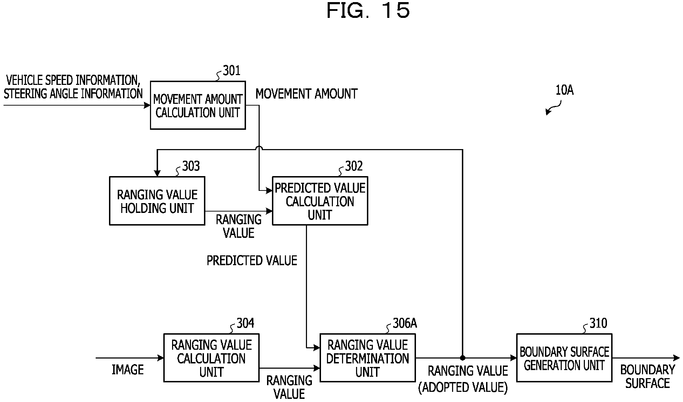

For example, the above-described embodiment includes the updated value calculation unit 308. However, the updated value calculation unit 308 may be omitted. For example, a sensing control device 10A illustrated in FIG. 15, the updated value calculation unit 308 is omitted, and the ranging value determination unit 306 is replaced with a ranging value determination unit 306A (another example of adopted value determination unit). The ranging value determination unit 306A determines whether or not a difference between the predicted value from the predicted value calculation unit 302 and the ranging value from the ranging value calculation unit 304 is equal to or more than a threshold. Then, in a case where the difference between the predicted value from the predicted value calculation unit 302 and the ranging value from the ranging value calculation unit 304 is equal to or more than the threshold, the ranging value determination unit 306A rejects (does not adopt) the ranging value. Note that, instead of the rejection, information indicating low reliability may be added. On the other hand, in a case where the difference between the predicted value from the predicted value calculation unit 302 and the ranging value from the ranging value calculation unit 304 is less than the threshold, the ranging value determination unit 306A adopts the ranging value as the adopted value. In this case, the ranging value holding unit 303 holds the adopted value at each time point.

Furthermore, in the above-described embodiment, the target parking position determined as described above is used for automatic parking. However, the target parking position may be used for semi-automatic parking or parking assistance (control for assisting travel to parking space). For example, in the parking assistance in which a driving force, a braking force, and steering are adjusted by an operation of a driver, the target parking position determined as described above may be displayed on the monitor 19. Then, immediately before the vehicle reaches the target parking position, assistance information for prompting a braking operation may be displayed on the monitor 19 or output by voice or the like.

REFERENCE SIGNS LIST

| | |
|---|---|
| 1 | vehicle system |
| 10 | sensing control device |
| 12 | vehicle control device |
| 14 | camera |
| 14a | front camera |

| 14b | side camera |
|---|---|
| 14c | side camera |
| 15a | steering angle sensor |
| 15b | vehicle speed sensor |
| 16 | steering wheel control device |
| 18 | brake and accelerator control device |
| 19 | monitor |
| 113 | interface |
| 114 | interface |
| 301 | movement amount calculation unit |
| 302 | predicted value calculation unit |
| 303 | ranging value holding unit |
| 304 | ranging value calculation unit |
| 306, 306A | ranging value determination unit |
| 308 | updated value calculation unit |
| 310 | boundary surface generation unit |
| 400 | detection target point |
| 401 | picture |
| 402 | picture |
| 501 | camera coordinate system |
| 502 | absolute coordinate system |
| 700 | region |
| 702 | outline |
| 704 | boundary surface |
| 800 | boundary surface |
| 801 | obstacle |
| 802 | obstacle |
| 900 | boundary surface |
| 901 | adopted value |
| 910 | boundary surface |
| 911 | adopted value |
| 920 | boundary surface |
| 921 | adopted value |
| 1400 | region |
| 1401 | region |
| 1402 | region |
| 1403 | region |

**Claims**

1. An object information generation device comprising:

   a measurement value calculation unit configured to calculate a measurement value indicating a position of a first point of an object at a plurality of time points including a first time point and a second time point before the first time point on the basis of a monocular camera mounted on a moving body;
   a predicted value calculation unit configured to calculate a predicted value of the position of the first point on the basis of the measurement value at the second time point and a movement amount of the moving body from the second time point to the first time point; and
   an adopted value determination unit configured to determine an adopted value at the position of the first point on the basis of a relationship between a difference between the measurement value and the predicted value at the first time point and a threshold.

2. The object information generation device according to claim 1, wherein
   in a case where the difference is less than the threshold, the adopted value determination unit determines the measurement value at the first time point as the adopted value.

3. The object information generation device according to claim 2, wherein

the adopted value determination unit rejects the measurement value at the first time point in a case where the difference is equal to or more than the threshold.

4.  The object information generation device according to claim 2, wherein
    the adopted value determination unit determines the adopted value on the basis of the measurement value at the first time point and the predicted value in a case where the difference is equal to or more than the threshold.

5.  The object information generation device according to claim 1, wherein

    the predicted value calculation unit calculates the predicted values at a plurality of the first time points, and
    the adopted value determination unit determines the difference on the basis of a distribution of the measurement values at a plurality of times points and a distribution of the predicted values at the plurality of first time points.

6.  The object information generation device according to claim 5, wherein
    the adopted value determination unit determines the adopted value on the basis of the distribution of the measurement values in a case where the difference is less than the threshold.

7.  The object information generation device according to claim 1, wherein

    the predicted value calculation unit calculates the predicted values at a plurality of the first time points, and
    the adopted value determination unit determines the adopted value on the basis of the distribution of the measurement values at a plurality of time points and a distribution of the predicted values at the plurality of first time points in a case where the difference is equal to or more than the threshold.

8.  The object information generation device according claim 7, wherein
    the adopted value determination unit determines a center value of a probability distribution generated on the basis of both of the measurement value and the predicted value as the adopted value.

9.  The object information generation device according to any one of claims 1 to 8, wherein
    the first point includes a plurality of points, and the object information generation device further comprising:
    a boundary surface calculation unit configured to calculate a boundary surface of the object on the basis of the adopted value for each first point.

10. The object information generation device according to claim 9, further comprising:
    a control unit configured to perform control for assisting traveling to a parking space or control for traveling to the parking space on the basis of the boundary surface.

11. An object information generation program for causing a computer to execute processing for:

    calculating a measurement value indicating a position of a first point of an object at a plurality of time points including a first time point and a second time point before the first time point on the basis of a monocular camera mounted on a moving body;
    calculating a predicted value of the position of the first point on the basis of the measurement value at the second time point and a movement amount of the moving body from the second time point to the first time point; and
    determining an adopted value at the position of the first point on the basis of a relationship between a difference between the measurement value and the predicted value at the first time point and a threshold.

FIG. 1

# FIG. 2

## FIG. 3

VEHICLE SPEED INFORMATION, STEERING ANGLE INFORMATION

301
MOVEMENT AMOUNT CALCULATION UNIT

MOVEMENT AMOUNT

10

303
RANGING VALUE HOLDING UNIT

302
PREDICTED VALUE CALCULATION UNIT

RANGING VALUE

PREDICTED VALUE

PREDICTED VALUE

304
RANGING VALUE CALCULATION UNIT

IMAGE

RANGING VALUE

306
RANGING VALUE DETERMINATION UNIT

RANGING VALUE

308
UPDATED VALUE CALCULATION UNIT

ADOPTED VALUE

310
BOUNDARY SURFACE GENERATION UNIT

BOUNDARY SURFACE

# FIG. 4

| TARGET OBJECT ID | DETECTION TARGET POINT ID | TIME POINT ID | RANGING VALUE |
|---|---|---|---|
| 0001 | 0001A | 0001t1 | (x0, y0) |
| 0001 | 0001A | 0001t2 | (x1, y1) |
| 0001 | 0001A | 0001t3 | (x3, y3) |
| 0001 | 0001A | ... | ... |
| 0001 | 0001B | ... | ... |
| 0001 | 0001B | ... | ... |
| 0001 | 0001B | ... | ... |
| 0002 | 0001A | ... | ... |

# FIG. 5A

IMAGE G1

401

400

IMAGE G2

402

TIME POINT
t1

14

14

TIME POINT
t2

R1

# FIG. 5B

OPTICAL AXIS        OPTICAL AXIS

400

$\alpha 1$        $\alpha 2$

14        MOVEMENT AMOUNT        14
(BASE LINE LENGTH)

TIME POINT t1        TIME POINT t2

# FIG. 6

FIG. 7

(a)

(b)

(c)

702

700    700

704    R2

# FIG. 8

# FIG. 9A

(a)

1402

1400

1401

14b

14a

PA

14

14c

901

1403

801

802

(b)

900

801

802

# FIG. 9B

(a)

1402

1401

14a

14b

PB

14c

14

1400

1403

911

901

801

802

(b)

910

900

801

802

# FIG. 9C

(a)

(b)

# FIG. 10

MOVEMENT
AMOUNT →

COORDINATE
TRANSFORMATION
(ROTATION, TRANSLATION)

→ PREDICTED VALUE
(ABSOLUTE COORDINATE)
$P_n' (x_n', y_n')$

RANGING VALUE
(ABSOLUTE COORDINATE)
$P_{n-1} (x_{n-1}, y_{n-1})$

# FIG. 11

RANGING VALUE
(ABSOLUTE COORDINATE)
$P_n(x_n, y_n)$

MOVEMENT
AMOUNT

KALMAN FILTER

PREDICTED VALUE
(ABSOLUTE COORDINATE)
$P_n'(x_n', y_n')$

PREDICTED
ESTIMATION VALUE
(ABSOLUTE
COORDINATE)

COORDINATE
TRANSFORMATION
(ROTATION,
TRANSLATION)

PREVIOUS PREDICTED VALUE (ABSOLUTE COORDINATE)
$P_{n-1}'(x_{n-1}', y_{n-1}')$

# FIG. 12

PRIOR DISTRIBUTION

$\Delta x1$

OBSERVATION
DISTRIBUTION

PREDICTED
VALUE
$x_p$

ADOPTED
VALUE
$x_u$

RANGING
VALUE
$x_o$

# FIG. 13

POSTERIOR
DISTRIBUTION

PRIOR DISTRIBUTION

OBSERVATION
DISTRIBUTION

PREDICTED
VALUE
$x_p$

ADOPTED
VALUE
$x_u'$

RANGING
VALUE
$x_o$

# FIG. 14

START

S1400
CALCULATE RANGING VALUE

S1402
ACQUIRE VEHICLE SPEED

S1404
ACQUIRE STEERING ANGLE

S1406
CALCULATE MOVEMENT AMOUNT

S1408
CALCULATE PREDICTED VALU

S1410
IS DIFFERENCE BETWEEN PREDICTED VALUE AND RANGING VALUE EQUAL TO OR MORE THAN THRESHOLD?

NO

S1411
ADOPTED VALUE ← RANGING VALUE

YES S1412
CALCULATE UPDATED VALUE (ADOPTED VALUE)

S1414
PLOT ADOPTED VALUE ON GRID

S1416
GENERATE REGION

S1418
COUPLE REGIONS

S1420
GENERATE OUTLINE

S1422
CALCULATE BOUNDARY SURFACE

END

FIG. 15

## INTERNATIONAL SEARCH REPORT

| International application No. |
|---|
| PCT/JP2017/045801 |

| A. CLASSIFICATION OF SUBJECT MATTER |
|---|
| Int. Cl. G06T7/00(2017.01)i, G08G1/16(2006.01)i |

According to International Patent Classification (IPC) or to both national classification and IPC

| B. FIELDS SEARCHED |
|---|
| Minimum documentation searched (classification system followed by classification symbols) |
| Int. Cl. G06T7/00, G08G1/16 |

Documentation searched other than minimum documentation to the extent that such documents are included in the fields searched

Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| A | JP 2014-109819 A (FUJITSU LTD.) 12 June 2014, paragraphs [0012], [0040]-[0049], [0054], [0059], [0071], [0088], [0092], fig. 1-3, 7, 9, 11-14 & US 2014/0152780 A1, paragraphs [0045], [0074]-[0083], [0088], [0097], [0113], [0123], [0127], fig. 1-3, 7, 9, 11-14 & EP 2738740 A1 | 1-11 |
| A | JP 2014-240753 A (FUJITSU LTD.) 25 December 2014, claim 1, paragraphs [0004]-[0006], [0012], [0015], [0019], fig. 1, 4 & US 2014/0362193 A1, claim 1, paragraphs [0046]-[0048], [0051], [0055], fig. 1, 4 | 1-11 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.02.2018 | 20.02.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001266160 A
- JP 2011090490 A